# EUROPEAN PATENT SPECIFICATION

(11) **EP 4 491 498 B1**
(45) Date of publication and mention of the grant of the patent: **15.10.2025**
(21) Application number: 23212568.2
(22) Date of filing: 28.11.2023
(51) Int. Cl.: B62J 17/00, B62K 11/00, B62M 7/00

(54) **JOINT STRUCTURE FOR VEHICLE BODY COVER IN STRADDLED VEHICLE**
VERBINDUNGSSTRUKTUR FÜR EINE FAHRZEUGKAROSSERIEABDECKUNG IN EINEM GRÄTSCHSITZFAHRZEUG
STRUCTURE DE JOINT POUR COUVERCLE DE CARROSSERIE DE VÉHICULE DANS UN VÉHICULE À ENFOURCHER

(30) Priority: 12.07.2023 JP 2023114564
(43) Date of publication of application: 15.01.2025
(73) Proprietor: Yamaha Hatsudoki Kabushiki Kaisha, Iwata-shi, Shizuoka 438-8501 (JP)
(72) Inventor: UDO, Hirotaka, Iwata-shi, 4388501 (JP)
(74) Representative: Studio Torta S.p.A.

(56) References cited:
- EP-B1- 0 102 347
- WO-A1-02/055370

## Description

The present invention relates to a joint structure for a vehicle body cover in a straddled vehicle.

### BACKGROUND ART

Some straddled vehicles are equipped with a vehicle body cover. The vehicle body cover is divided into a plurality of covers, which are joined to each other. For example, the motorcycle disclosed in Japanese Utility Model Publication No. H6-15791 includes a front cover and an inner cover that are separate bodies from each other. Along the inner sides of the mating edges of these covers, one cover is provided with a plurality of locking holes, and the other cover is provided with a plurality of hooks. The front cover and the inner cover are joined to each other by locking these hooks into the locking holes.

WO 02/055370 Al discloses the following features of claim 1; a joint structure for a straddled vehicle body cover including a first cover and a second cover attachable to a straddled vehicle, the joint structure comprising: a plurality of first inner plate portions arranged along a seam between the first cover and the second cover and provided on the first cover; a plurality of second outer plate portions that are arranged along the seam, are provided on the second cover, and respectively overlap the plurality of first inner plate portions from the outside in the thickness direction; a plurality of first protrusions provided on the first cover respectively; a plurality of first holes that are provided in the other of the plurality of first outer plate portions, and engage with the plurality of first protrusions, respectively.

### SUMMARY

A straddled vehicle banks left and right while driving. When the vehicle banks to the left and when the vehicle banks to the right, the force that deforms the vehicle body cover acts in different directions. Therefore, the vehicle body cover for the straddled vehicle is required to have high joint strength in various directions. However, in a joint structure such as the above-mentioned straddled vehicle in which the hooks are locked in the locking holes, even if the joint strength in one direction is high, the joint strength in other directions is low.

Furthermore, in order to increase the joint strength of the vehicle body cover, it is conceivable to firmly fasten a plurality of covers to each other using fastening members such as rivets or bolts. However, in this case, the rigidity of the fastening portion of the vehicle body cover is too high, making it difficult for the fastening portion to follow the deformation of the vehicle body cover.

### DESCRIPTION OF THE INVENTION

An object of the present invention is to provide flexibility of the vehicle body cover and to obtain high joint strength in different directions in a joint structure of a vehicle body cover in a straddled vehicle.

One aspect of the present invention is a joint structure for a vehicle body cover in a straddled vehicle. The vehicle body cover includes a first cover and a second cover. The joint structure includes a plurality of first inner plate portions, a plurality of second inner plate portions, a plurality of first outer plate portions, a plurality of second outer plate portions, a plurality of first protrusions, and a plurality of first holes, a plurality of second protrusions, and a plurality of second holes. The plurality of first inner plate portions are arranged along a seam between the first cover and the second cover. The plurality of first inner plate portions are provided on the first cover. The plurality of second inner plate portions are arranged along the seam. The plurality of second inner plate portions are provided on the second cover. The plurality of first outer plate portions are arranged along the seam. The plurality of first outer plate portions are provided on the first cover. The plurality of first outer plate portions respectively overlap the plurality of second inner plate portions from an outside in a thickness direction of the first cover and the second cover. The plurality of second outer plate portions are arranged along the seam. The plurality of second outer plate portions are provided on the second cover. The plurality of second outer plate portions respectively overlap the plurality of first inner plate portions from the outside in the thickness direction. The plurality of first protrusions are provided on one of the plurality of first outer plate portions and the plurality of second inner plate portions respectively. The plurality of first holes are provided in the other of the plurality of first outer plate portions and the plurality of second inner plate portions respectively. The plurality of first holes are respectively engaged with the plurality of first protrusions. The plurality of second protrusions are provided on one of the plurality of first inner plate portions and the plurality of second outer plate portions respectively. The plurality of second holes are provided in the other of the plurality of first inner plate portions and the plurality of second outer plate portions respectively. The plurality of second holes are respectively engaged with the plurality of second protrusions.

In the straddled vehicle according to the present aspect, when a force is applied to the vehicle body cover in a direction in which the first protrusion is removed from the first hole, that is, in a direction in which the first outer plate portion is separated from the second inner plate portion, a force with which the first inner plate portion is pressed against the second outer plate portion increases. This increases a force with which the second protrusion locks into the second hole. Conversely, when a force is applied to the vehicle body cover in a direction in which the second protrusion is removed from the second hole, that is, in a direction in which the second outer plate portion is separated from the first inner plate portion, a force with which the second inner plate portion is pressed against the first outer plate portion increases. This increases a force with which the first protrusion locks into the first hole. Therefore, it is possible to obtain high joint strength in different directions while providing the flexibility of the vehicle body cover without using strong fasteners such as rivets or the like.

The plurality of first protrusions may be provided on the plurality of first outer plate portions respectively. The plurality of first holes may be provided in the plurality of second inner plate portions respectively. The plurality of second protrusions may be provided on the plurality of second outer plate portions respectively. The plurality of second holes may be provided in the plurality of first inner plate portions respectively.

The plurality of first protrusions and the plurality of second holes may be alternately arranged along the seam in the first cover. The plurality of second protrusions and the plurality of first holes may be alternately arranged along the seam in the second cover. In this case, the first cover and the second cover are difficult to separate from each other while providing the flexibility of the vehicle body cover at the seam.

The plurality of first outer plate portions and the plurality of second outer plate portions may each have a zigzag shape that meshes with each other in a extending direction in which the seam extends. In this case, high joint strength can be obtained even against deformation of the vehicle body cover in the extending direction of the seam.

The plurality of first inner plate portions and the plurality of second inner plate portions may each have a zigzag shape that meshes with each other in the extending direction in which the seam extends. In this case, high joint strength can be obtained even against deformation of the vehicle body cover in the extending direction of the seam.

The plurality of first outer plate portions and the plurality of second outer plate portions may be arranged alternately with each other along the seam. In this case, high joint strength can be obtained even against deformation of the vehicle body cover in the extending direction of the seam.

The plurality of first outer plate portions and the plurality of second outer plate portions may be arranged flush on an outer surface of the vehicle body cover. In this case, compared to a case where a protrusion is provided on the outer surface of the vehicle body cover, the vehicle body cover is prevented from coming into contact with the road surface when the vehicle travels on a road surface with a step.

The plurality of first inner plate portions and the plurality of second inner plate portions may be arranged alternately with each other along the seam. In this case, high joint strength can be obtained even against deformation of the vehicle body cover in the extending direction of the seam.

The plurality of first protrusions may be provided on the plurality of first outer plate portions respectively. The plurality of first holes may be provided in the plurality of second inner plate portions respectively. The plurality of second protrusions may be provided on the plurality of first inner plate portions respectively. The plurality of second holes may be provided in the plurality of second outer plate portions respectively.

The vehicle body cover may have a curved shape at the seam. In this case, high joint strength can be obtained even for the curved vehicle body cover.

The vehicle body cover may be divided into the first cover and the second cover in a left-right direction of the straddled vehicle. In this case, when the vehicle banks left or right, a large force is applied that deforms the vehicle body cover, but the joint structure according to the present aspect provides flexibility and high joint strength.

The straddled vehicle may include a front wheel. The joint structure may be located adjacent to the front wheel. In this case, although the joint structure is exposed to harsh environments such as collisions with stones and the like from the front wheel, the joint structure according to the present aspect provides high joint strength.

The first cover and the second cover may be an undercover arranged behind the front wheel. In this case, although the joint structure is exposed to harsh environments such as collisions with stones and the like from the front wheel, the joint structure according to the present aspect provides high joint strength.

The first cover and the second cover may be an inner panel arranged above the front wheel. In this case, although the joint structure is exposed to harsh environments such as collisions with stones and the like from the front wheel, the joint structure according to the present aspect provides high joint strength.

Another aspect of the present invention is a straddled vehicle, which includes the above-described joint structure.

### BRIEF DESCRIPTION OF THE DRAWINGS

FIG. 1 is a side view of a straddled vehicle according to an embodiment.
FIG. 2 is a front view of the straddled vehicle.
FIG. 3 is a bottom view of an undercover.
FIG. 4 is a perspective view of the undercover.
FIG. 5 is a perspective view of the undercover.
FIG. 6 is a perspective view showing a joint structure between a first cover and a second cover.
FIG. 7 is a perspective view showing the joint structure between the first cover and the second cover.
FIG. 8 is a top view showing the joint structure of the first cover and the second cover.
FIG. 9 is an exploded perspective view showing the joint structure of the first cover and the second cover.
FIG. 10 is an exploded perspective view showing the joint structure of the first cover and the second cover.
FIG. 11 is a sectional view taken along line XI-XI in FIG. 8.
FIG. 12 is a sectional view taken along line XII-XII in FIG. 8.
FIG. 13 is a bottom view showing an inner panel according to another embodiment.
FIG. 14 is a perspective view showing a joint structure between a first cover and a second cover according to a modification.
FIG. 15 is a perspective view showing the joint structure between the first cover and the second cover according to the modification.

### EMBODIMENTS OF THE INVENTION

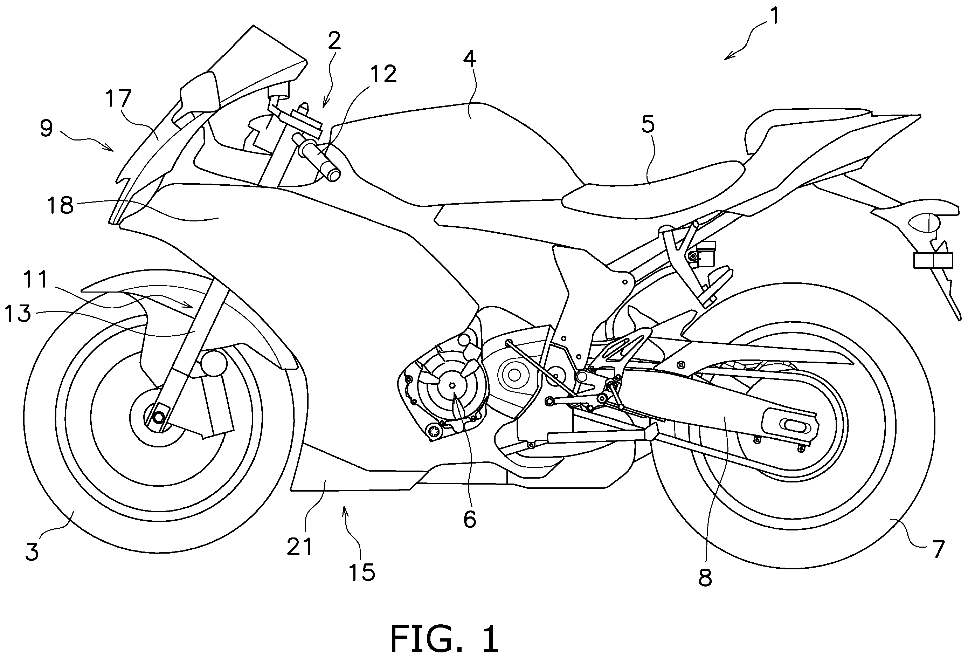

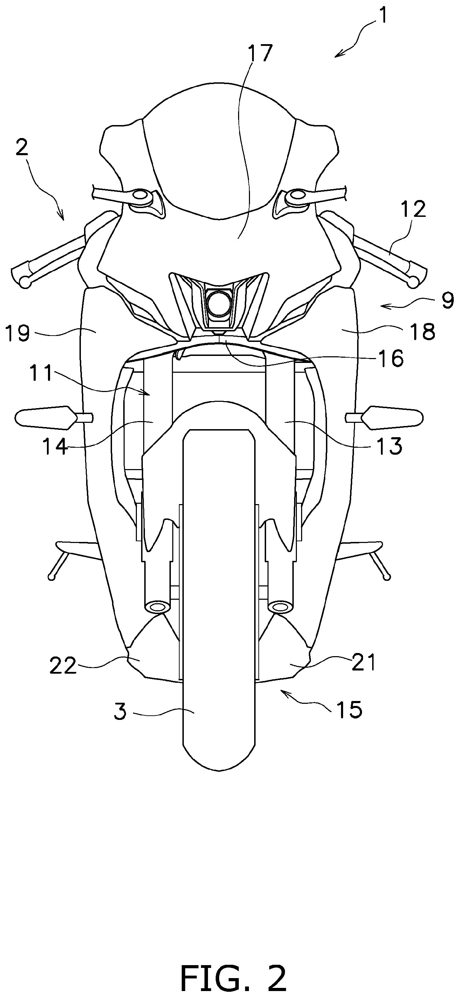

Hereinafter, a straddled vehicle according to an embodiment will be described with reference to the drawings. FIG. 1 is a side view of a straddled vehicle 1 according to an embodiment. FIG. 2 is a front view of the straddled vehicle 1. The straddled vehicle 1 according to the present embodiment is a so-called full cowl type motorcycle. As shown in FIG. 1, the straddled vehicle 1 includes a steering device 2, a front wheel 3, a fuel tank 4, a seat 5, an engine 6, a rear wheel 7, a rear arm 8, and a vehicle body cover 9. In the present embodiment, the front, rear, left, and right directions refer to the front, rear, left, and right directions as viewed from a rider seated on the seat 5.

The steering device 2 is steered by a rider. The steering device 2 includes a front fork 11 and a handle member 12. The front fork 11 rotatably supports the front wheel 3. The handle member 12 is connected to the front fork 11. As shown in FIG. 2, the front fork 11 includes a first suspension 13 and a second suspension 14.

The fuel tank 4 is arranged behind the handle member 12. The seat 5 is arranged behind the fuel tank 4. The engine 6 is arranged between the front wheel 3 and the rear wheel 7. The engine 6 is arranged below the fuel tank 4. The engine 6 generates driving force that rotates the rear wheel 7. The rear wheel 7 is arranged behind the engine 6. The rear wheel 7 is rotatably supported by the rear arm 8.

The vehicle body cover 9 includes a front cover 17, a first side cover 18, and a second side cover 19. The front cover 17 is arranged in front of the steering device 2. The first side cover 18 and the second side cover 19 extend rearward from the front cover 17. The first side cover 18 and the second side cover 19 cover the steering device 2 and the engine 6 from the left and right sides.

The vehicle body cover 9 includes an inner panel 16 and an undercover 15. The inner panel 16 is arranged above the front wheel 3. The inner panel 16 is arranged close to the front wheel 3. The inner panel 16 is arranged inside the first side cover 18 and the second side cover 19.

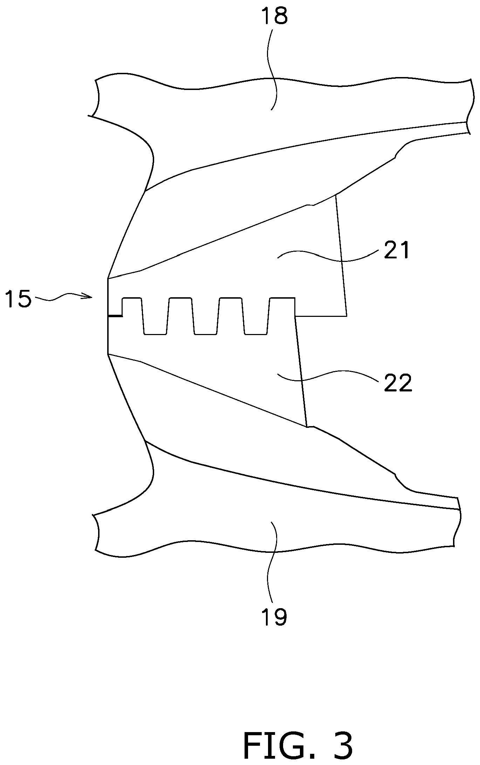

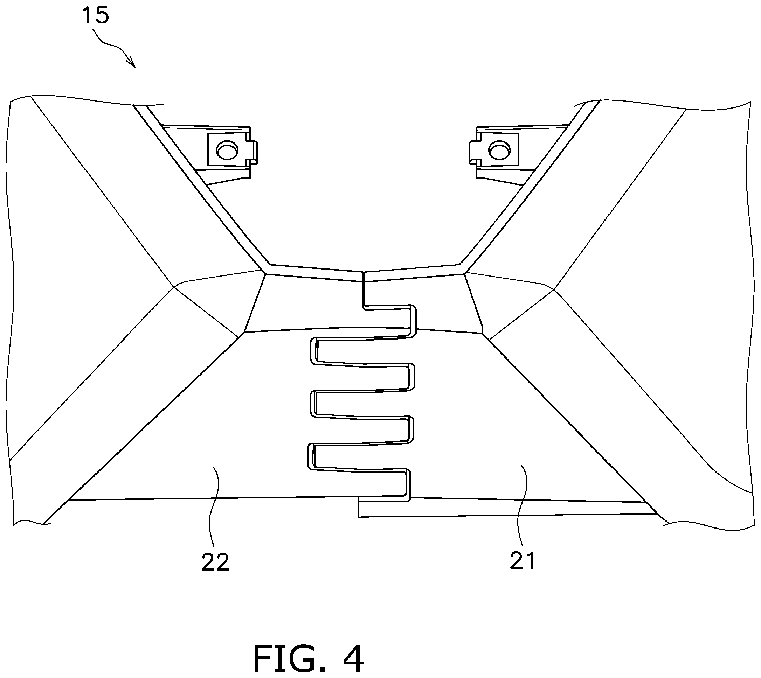

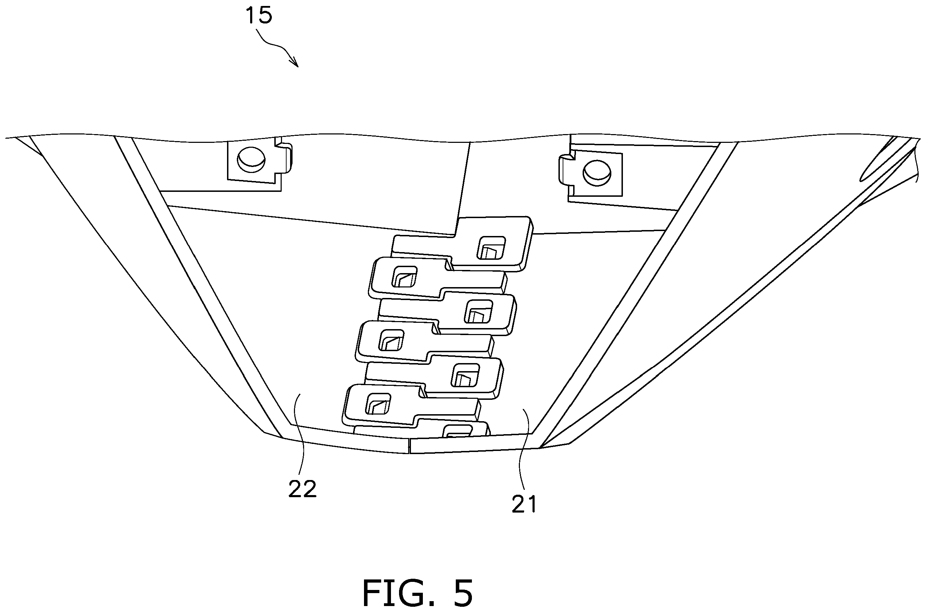

The undercover 15 is arranged behind the front wheel 3. The undercover 15 is arranged close to the front wheel 3. The undercover 15 is arranged below the first side cover 18 and the second side cover 19. FIG. 3 is a bottom view of the undercover 15. FIGS. 4 and 5 are perspective views of the undercover 15. FIG. 4 shows a bottom surface of the undercover 15. FIG. 5 shows a top surface of the undercover 15.

As shown in FIGS. 3 to 5, the undercover 15 includes a first cover 21 and a second cover 22. The first cover 21 and the second cover 22 are separate bodies from each other. The undercover 15 is divided into the first cover 21 and the second cover 22 in the left-right direction. The first cover 21 is arranged below the first side cover 18. The first cover 21 is connected to the first side cover 18. The second cover 22 is arranged below the second side cover 19. The second cover 22 is connected to the second side cover 19. In the present embodiment, the first cover 21 is arranged on the left side, and the second cover 22 is arranged on the right side. However, the first cover 21 may be arranged on the right side, and the second cover 22 may be arranged on the left side. The first cover 21 and the second cover 22 are joined to each other.

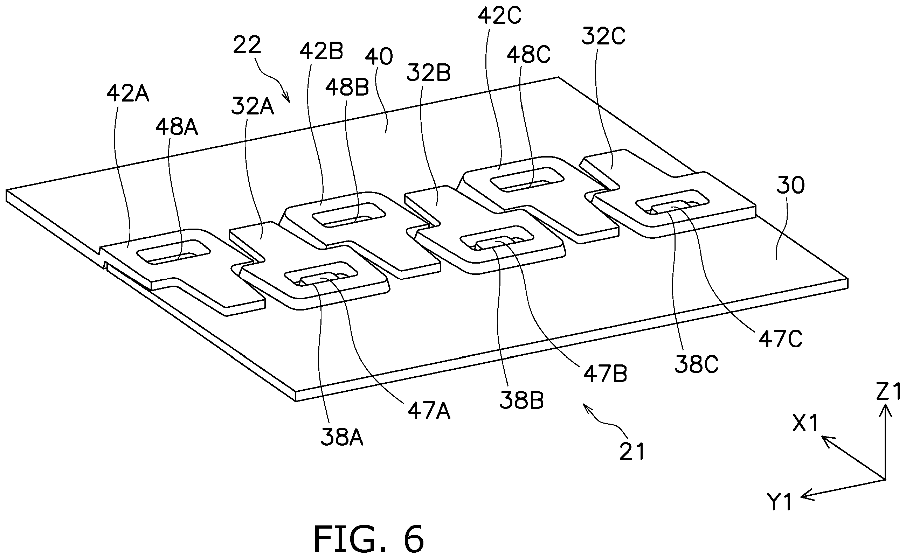

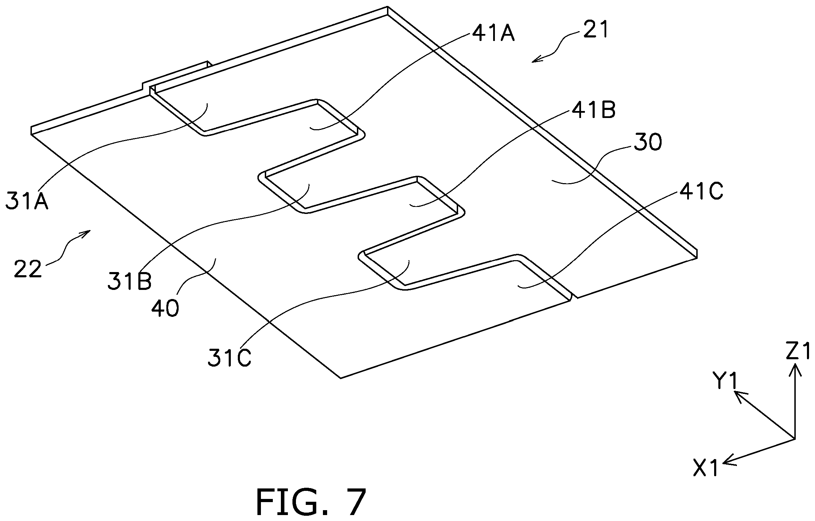

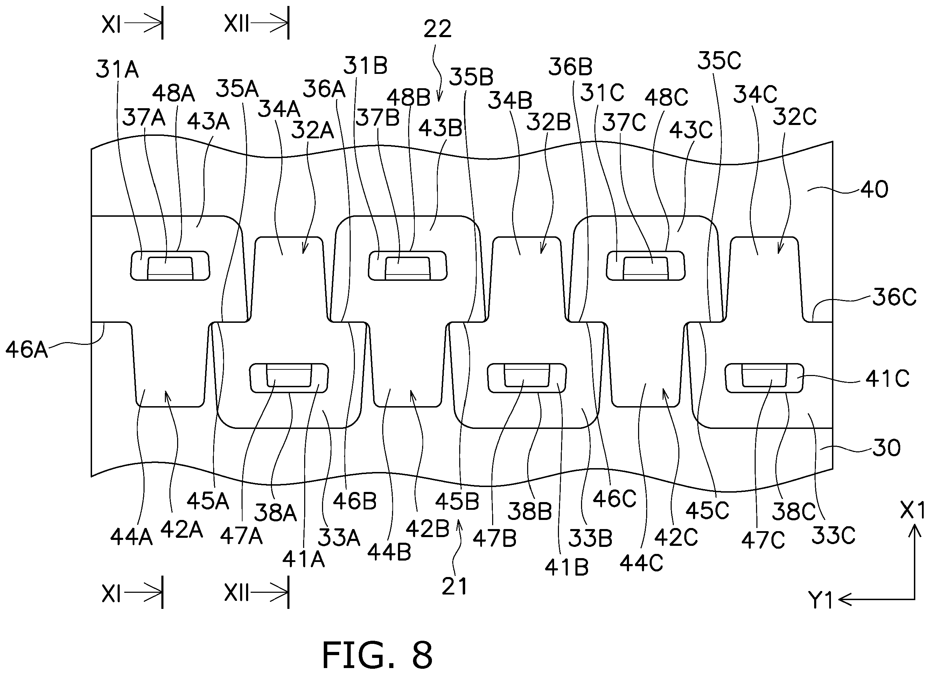

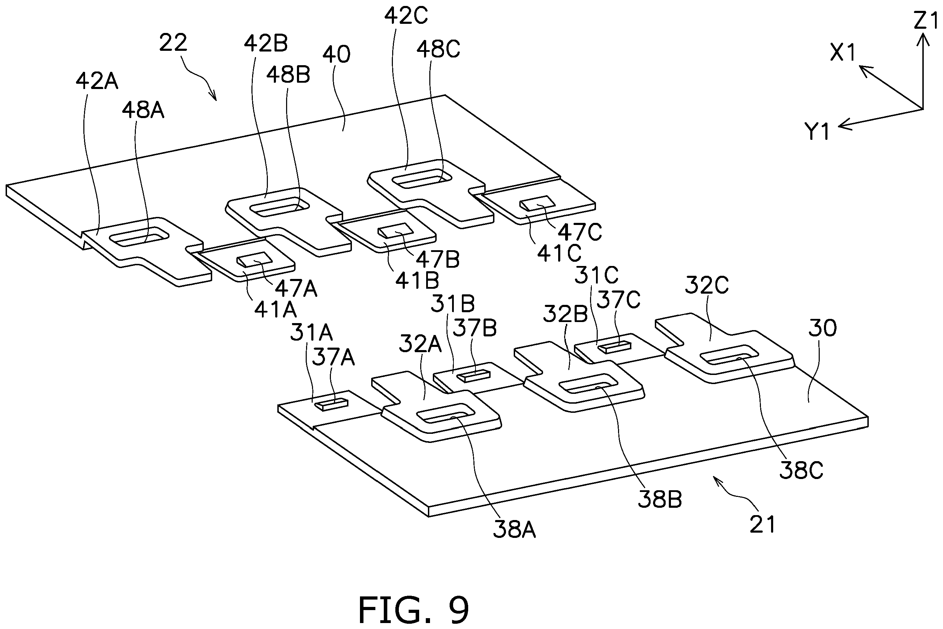

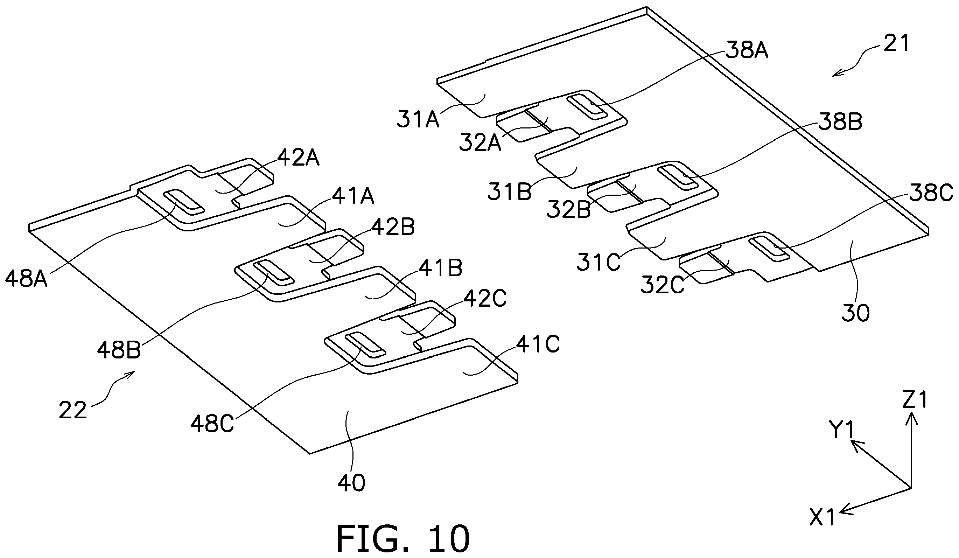

A joint structure between the first cover 21 and the second cover 22 will be described below. FIGS. 6 and 7 are perspective views showing the joint structure between the first cover 21 and the second cover 22. FIG. 6 shows the top surfaces of the first cover 21 and the second cover 22. FIG. 7 shows the bottom surfaces of the first cover 21 and the second cover 22. FIG. 8 is a top view showing the joint structure between the first cover 21 and the second cover 22. FIGS. 9 and 10 are exploded perspective views showing the joint structure of the first cover 21 and the second cover 22. FIG. 9 shows the top surfaces of the first cover 21 and the second cover 22. FIG. 10 shows the bottom surfaces of the first cover 21 and the second cover 22.

Note that in FIGS. 6 to 10, only the vicinity of the joint structure between the first cover 21 and the second cover 22 is illustrated, and other parts are omitted. In the following description, a direction in which a seam between the first cover 21 and the second cover 22 extends will be referred to as an extending direction Y1. A direction in which the first cover 21 and the second cover 22 face each other will be referred to as a joining direction X1. In the present embodiment, the extending direction Y1 corresponds to the front-rear direction of the straddled vehicle 1. The joining direction X1 corresponds to the left-right direction of the straddled vehicle 1. Further, a thickness direction Z1 of the first cover 21 and the second cover 22 corresponds to the vertical direction of the straddled vehicle 1.

As shown in FIGS. 6 to 10, the first cover 21 includes a first main plate portion 30, a plurality of first outer plate portions 31A to 31C, and a plurality of first inner plate portions 32A to 32C. The first main plate portion 30 has a flat shape. Alternatively, the first main plate portion 30 may have a curved shape. The plurality of first outer plate portions 31A to 31C and the plurality of first inner plate portions 32A to 32C protrude from the first main plate portion 30 in the joining direction X1. The plurality of first outer plate portions 31A to 31C are arranged in line in the extending direction Y1. The plurality of first inner plate portions 32A to 32C are arranged in line in the extending direction Y1. The plurality of first outer plate portions 31A to 31C and the plurality of first inner plate portions 32A to 32C are alternately arranged in line in the extending direction Y1. The plurality of first outer plate portions 31A to 31C are located on the outer side than the plurality of first inner plate portions 32A to 32C in the thickness direction Z1.

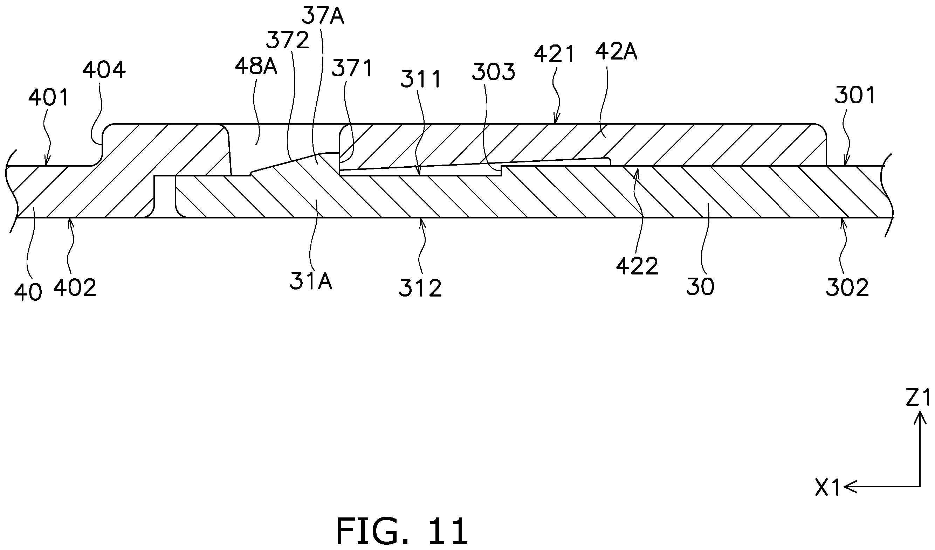

Specifically, as shown in FIG. 7, the first outer plate portions 31A to 31C have a tapered shape toward the joining direction X1. FIG. 11 is a sectional view taken along line XI-XI in FIG. 8. As shown in FIG. 11, the inner surface 311 of the first outer plate portion 31A is located on the outer side than the inner surface 301 of the first main plate portion 30 in the thickness direction Z1. A stepped portion 303 is provided between the inner surface 311 of the first outer plate portion 31A and the inner surface 301 of the first main plate portion 30. The outer surface 312 of the first outer plate portion 31A is flush with the outer surface 302 of the first main plate portion 30. The other first outer plate portions 31B and 31C also have the same shape as the first outer plate portion 31A.

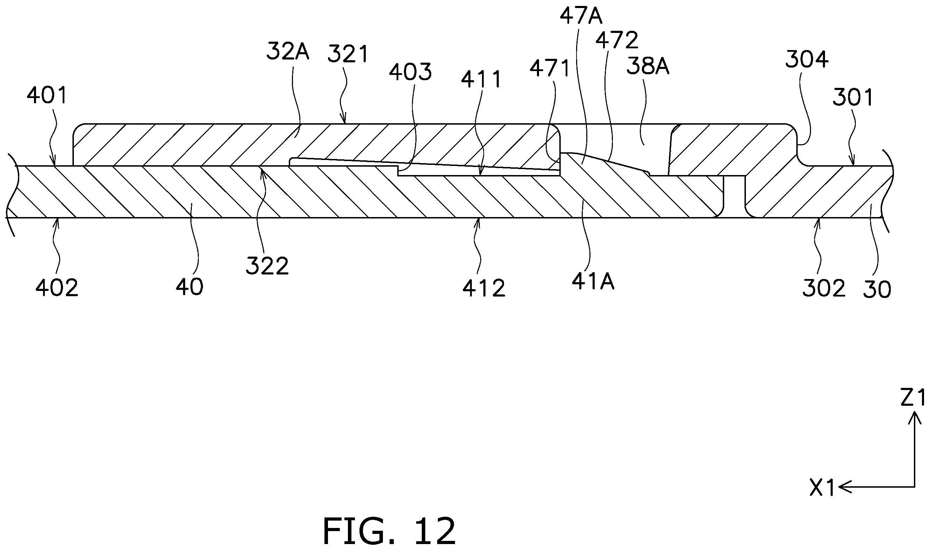

FIG. 12 is a sectional view taken along line XII-XII in FIG. 8. As shown in FIG. 12, the inner surface 321 of the first inner plate portion 32A is located on the inner side than the inner surface 301 of the first main plate portion 30 in the thickness direction Z1. A stepped portion 304 is provided between the inner surface 321 of the first inner plate portion 32A and the inner surface 301 of the first main plate portion 30. The outer surface 322 of the first inner plate portion 32A is located on the inner side than the outer surface 302 of the first main plate portion 30 in the thickness direction Z1.

As shown in FIG. 8, the first inner plate portion 32A includes a first wide portion 33A and a first narrow portion 34A. The first narrow portion 34A protrudes from the first wide portion 33A in the joining direction X1. The first narrow portion 34A is smaller than the first wide portion 33A in the extending direction Y1. Therefore, a pair of first corner portions 35A and 36A are provided between the first narrow portion 34A and the first wide portion 33A. The pair of first corner portions 35A and 36A extend from the first narrow portion 34A in one direction and the other in the extending direction Y1, respectively.

The other first inner plate portions 32B and 32C also have the same shape as the first inner plate portion 32A. The first inner plate portion 32B includes a first wide portion 33B and a first narrow portion 34B. A pair of first corner portions 35B and 36B are provided between the first wide portion 33B and the first narrow portion 34B. The first inner plate portion 32C includes a first wide portion 33C and a first narrow portion 34C. A pair of first corner portions 35C and 36C are provided between the first wide portion 33C and the first narrow portion 34C.

The second cover 22 includes a second main plate portion 40, a plurality of second outer plate portions 41A to 41C, and a plurality of second inner plate portions 42A to 42C. The second main plate portion 40 has a flat shape. Alternatively, the second main plate portion 40 may have a curved shape. The plurality of second outer plate portions 41A to 41C and the plurality of second inner plate portions 42A to 42C protrude from the second main plate portion 40 in the joining direction X1. The plurality of second outer plate portions 41A to 41C are arranged in line in the extending direction Y1. The plurality of second inner plate portions 42A to 42C are arranged in line in the extending direction Y1. The plurality of second outer plate portions 41A to 41C and the plurality of second inner plate portions 42A to 42C are alternately arranged in line in the extending direction Y1. The plurality of second outer plate portions 41A to 41C are located on the outer side than the plurality of second inner plate portions 42A to 42C in the thickness direction Z1.

The plurality of second outer plate portions 41A to 41C have the same shape as the plurality of first outer plate portions 31A to 31C. As shown in FIG. 12, the inner surface 411 of the second outer plate portion 41A is located on the outer side than the inner surface 401 of the second main plate portion 40 in the thickness direction Z1. A stepped portion 403 is provided between the inner surface 411 of the second outer plate portion 41A and the inner surface 401 of the second main plate portion 40. The outer surface 412 of the second outer plate portion 41A is flush with the outer surface 402 of the second main plate portion 40. The other second outer plate portions 41B and 41C also have the same shape as the second outer plate portion 41A.

The plurality of second inner plate portions 42A to 42C have the same shape as the plurality of first inner plate portions 32A to 32C. As shown in FIG. 11, the inner surface 421 of the second inner plate portion 42A is located on the inner side than the inner surface 401 of the second main plate portion 40 in the thickness direction Z1. A stepped portion 404 is provided between the inner surface 421 of the second inner plate portion 42A and the inner surface 401 of the second main plate portion 40. The outer surface 422 of the second inner plate portion 42A is located on the inner side than the outer surface 402 of the second main plate portion 40 in the thickness direction Z1.

As shown in FIG. 8, the second inner plate portion 42A includes a second wide portion 43A and a second narrow portion 44A. A pair of second corner portions 45A and 46A are provided between the second narrow portion 44A and the second wide portion 43A. The second wide portion 43A, the second narrow portion 44A, and the pair of second corner portions 45A and 46A have the same shape as the first wide portion 33A, the first narrow portion 34A, and the pair of first corner portions 35A and 36A, respectively. The other second inner plate portions 42B and 42C also have the same shape as the second inner plate portion 42A. The second inner plate portion 42B includes a second wide portion 43B and a second narrow portion 44B. A pair of second corner portions 45B and 46B are provided between the second wide portion 43B and the second narrow portion 44B. The second inner plate portion 42C includes a second wide portion 43C and a second narrow portion 44C. A pair of second corner portions 45C and 46C are provided between the second wide portion 43C and the second narrow portion 44C.

The plurality of first outer plate portions 31A to 31C overlap with the plurality of second inner plate portions 42A to 42C from the outside in the thickness direction Z1, respectively. The plurality of second outer plate portions 41A to 41C overlap with the plurality of first inner plate portions 32A to 32C from the outside in the thickness direction Z1, respectively. As shown in FIG. 7, the plurality of first outer plate portions 31A to 31C and the plurality of second outer plate portions 41A to 41C are arranged alternately along the seam. The plurality of first outer plate portions 31A to 31C and the plurality of second outer plate portions 41A to 41C each have a zigzag shape that meshes with each other in the extending direction Y1 in which the seam extends. The plurality of first outer plate portions 31A to 31C and the plurality of second outer plate portions 41A to 41C are arranged flush on the outer surface of the undercover 15.

As shown in FIGS. 6 and 8, the plurality of first inner plate portions 32A to 32C and the plurality of second inner plate portions 42A to 42C are arranged alternately along the seam. The plurality of first inner plate portions 32A to 32C and the plurality of second inner plate portions 42A to 42C each have a zigzag shape that meshes with each other in the extending direction Y1 in which the seam extends.

Specifically, as shown in FIG. 8, the plurality of first wide portions 33A to 33C and the plurality of second narrow portions 44A to 44C are alternately arranged in line in the extending direction Y1. The plurality of second wide portions 43A to 43C and the plurality of first narrow portions 34A to 34C are alternately arranged in line in the extending direction Y1. The plurality of first corner portions 35A, 36A, 35B, 36B, and 35C and the plurality of second corner portions 45A, 46B, 45B, 46C, and 45C are arranged facing each other in the joining direction X1. The plurality of first corner portions 35A, 36A, 35B, 36B, and 35C and the plurality of second corner portions 45A, 46B, 45B, 46C, and 45C are in contact with each other, respectively.

A plurality of first protrusions 37A to 37C are provided on each of the plurality of first outer plate portions 31A to 31C, respectively. The plurality of first protrusions 37A to 37C are arranged along the seam between the first cover 21 and the second cover 22. The plurality of first protrusions 37A to 37C are arranged in line in the extending direction Y1. The plurality of first protrusions 37A to 37C each protrude inward in the thickness direction Z1 from the inner surface of the plurality of first outer plate portions 31A.

As shown in FIG. 11, the first protrusion 37A includes a first end surface 371 and a first inclined surface 372. The first end surface 371 extends inward in the thickness direction Z1 from the inner surface 311 of the first outer plate portion 31A. The first inclined surface 372 is inclined with respect to the inner surface 311 of the first outer plate portion 31A. The first inclined surface 372 is inclined outward in the thickness direction Z1 with respect to the joining direction X1. The other first protrusions 37B and 37C also have the same shape as the first protrusion 37A.

A plurality of second holes 38A to 38C are provided in the plurality of first inner plate portions 32A to 32C, respectively. The plurality of second holes 38A to 38C each penetrate the plurality of first inner plate portions 32A to 32C in the thickness direction Z1. Specifically, the plurality of second holes 38A to 38C are provided in the plurality of first wide portions 33A to 33C, respectively. The plurality of second holes 38A to 38C are arranged along the seam. The plurality of second holes 38A to 38C are arranged in line in the extending direction Y1. The plurality of first protrusions 37A to 37C and the plurality of second holes 38A to 38C are arranged alternately in the extending direction Y1 in the first cover 21. The plurality of first protrusions 37A to 37C are arranged closer to the second cover 22 than the plurality of second holes 38A to 38C in the joining direction X1.

A plurality of second protrusions 47A to 47C are provided on the plurality of second outer plate portions 41A to 41C, respectively. The plurality of second protrusions 47A to 47C are arranged along the seam between the first cover 21 and the second cover 22. The plurality of second protrusions 47A to 47C are arranged in line in the extending direction Y1. The plurality of second protrusions 47A to 47C each protrude inward in the thickness direction Z1 from the inner surface of the plurality of second outer plate portions 41A.

The plurality of second protrusions 47A to 47C have the same shape as the plurality of first protrusions 37A to 37C. As shown in FIG. 12, the second protrusion 47A includes a second end surface 471 and a second inclined surface 472. The second end surface 471 extends inward in the thickness direction Z1 from the inner surface 411 of the second outer plate portion 41A. The second inclined surface 472 is inclined with respect to the inner surface 411 of the second outer plate portion 41A. The second inclined surface 472 is inclined outward in the thickness direction Z1 with respect to the joining direction X1. The other second protrusions 47B and 47C also have the same shape as the second protrusion 47A.

A plurality of first holes 48A to 48C are provided in the plurality of second inner plate portions 42A to 42C, respectively. The plurality of first holes 48A to 48C respectively penetrate the plurality of second inner plate portions 42A to 42C in the thickness direction Z1. Specifically, the plurality of first holes 48A to 48C are provided in the plurality of second wide portions 43A to 43C, respectively. The plurality of first holes 48A to 48C are arranged along the seam. The plurality of first holes 48A to 48C are arranged in line in the extending direction Y1. The plurality of second protrusions 47A to 47C and the plurality of first holes 48A to 48C are arranged alternately in the extending direction Y1 in the second cover 22. The plurality of second protrusions 47A to 47C are arranged closer to the first cover 21 than the plurality of first holes 48A to 48C in the joining direction X1.

The plurality of first protrusions 37A to 37C are arranged within the plurality of first holes 48A to 48C, respectively. The plurality of first protrusions 37A to 37C are engaged with the plurality of first holes 48A to 48C. The plurality of second protrusions 47A to 47C are arranged within the plurality of second holes 38A to 38C, respectively. The plurality of second protrusions 47A to 47C are respectively engaged with the plurality of second holes 38A to 38C.

In the straddled vehicle 1 according to the present embodiment described above, when a force is applied to the undercover 15 in a direction in which the plurality of first protrusions 37A to 37C are removed from the plurality of first holes 48A to 48C, that is, in a direction in which the first outer plate portions 31A to 31C move away from the second inner plate portions 42A to 42C, a force pressing the first inner plate portions 32A to 32C against the second outer plate portions 41A to 41C increases. This increases a force with which the second protrusions 47A to 47C lock into the second holes 38A to 38C. Conversely, when a force is applied to the undercover 15 in a direction in which the plurality of second protrusions 47A to 47C are removed from the plurality of the second holes 38A to 38C, that is, in a direction in which the second outer plate portions 41A to 41C move away from the first inner plate portions 32A to 32C, a force with which the second inner plate portions 42A to 42C are pressed against the first outer plate portions 31A to 31C increases. This increases a force with which the first protrusions 37A to 37C engage the first holes 48A to 48C. Therefore, high joint strength in mutually different directions can be obtained while providing the flexibility of the undercover 15 without using strong fastener such as rivets or the like.

Although one embodiment of the present invention has been described above, the present invention is not limited to the above embodiment, and various changes can be made within the scope of the appended claims.

The straddled vehicle 1 is not limited to a full cowl type motorcycle, but may be a half cowl type or a naked type motorcycle. Alternatively, the straddled vehicle 1 may be another type of vehicle such as a moped or a scooter.

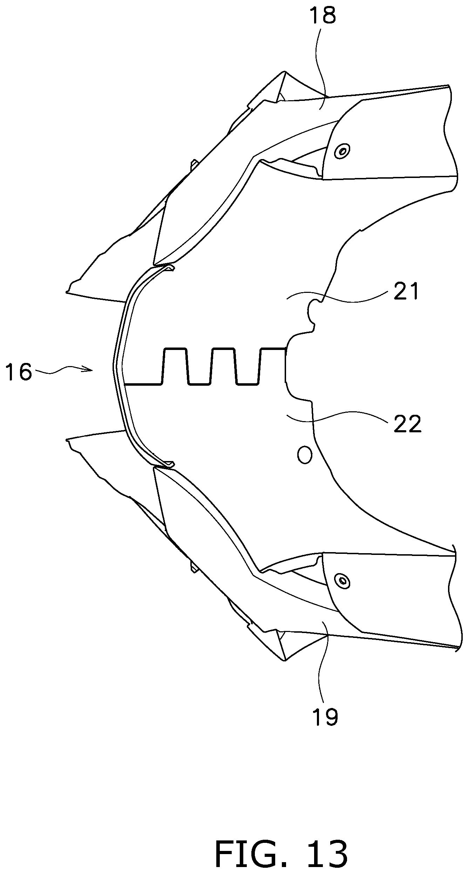

The first cover 21 and the second cover 22 are not limited to the undercover 15 but may be other parts of the vehicle body cover 9. For example, the first cover 21 and the second cover 22 may be the inner panel 16. As shown in FIG. 13, in the inner panel 16, the first cover 21 and the second cover 22 may be joined to each other by the above-described joint structure.

The shapes or arrangement of the first cover 21 and the second cover 22 are not limited to those of the above embodiments, and may be changed. The first cover 21 and the second cover 22 are not limited to a flat shape, but may have a curved shape at the seam. The first cover 21 and the second cover 22 may be separate bodies from each other not only in the left-right direction of the straddled vehicle 1 but also in the vertical direction or the front-rear direction.

The first cover 21 and the second cover 22 may be coupled by a fastening member such as a rivet. Even in that case, according to the joint structure according to the present embodiment, by reducing the number of fastening members, high joining strength in mutually different directions can be obtained while providing the flexibility of the undercover 15.

The shapes or arrangements of the first outer plate portions 31A to 31C, the first inner plate portions 32A to 32C, the second outer plate portions 41A to 41C, and the second inner plate portions 42A to 42C are not limited to those of the above embodiments, and may be changed. For example, the first inner plate portions 32A to 32C and the second inner plate portions 42A to 42C may have a straight shape similar to the first outer plate portions 31A to 31C and the second outer plate portions 41A to 41C of the above embodiment. Alternatively, the first outer plate portions 31A to 31C and the second outer plate portions 41A to 41C have a bent shape with corner portions similar to the first inner plate portions 32A to 32C and the second inner plate portions 42A to 42C of the above embodiment.

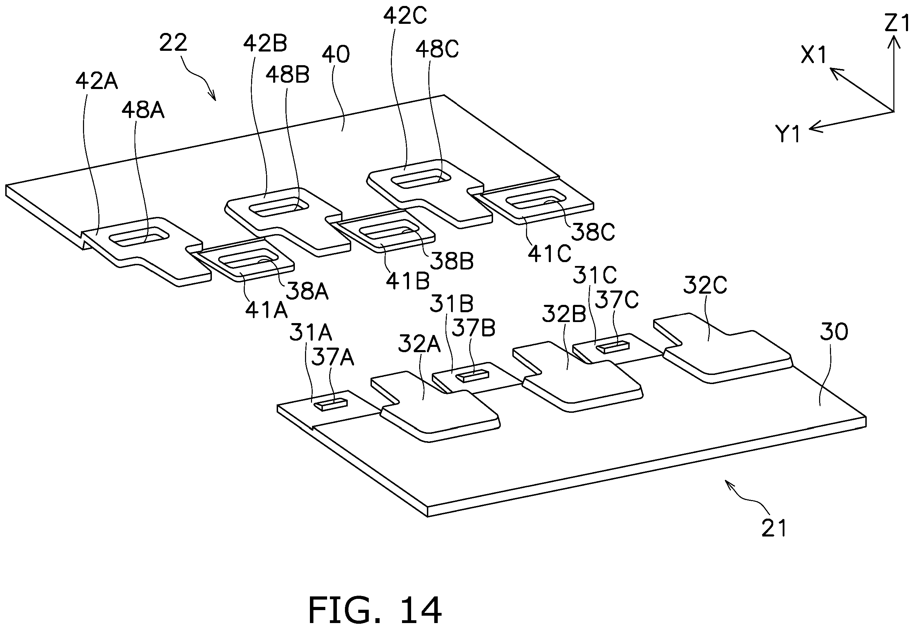

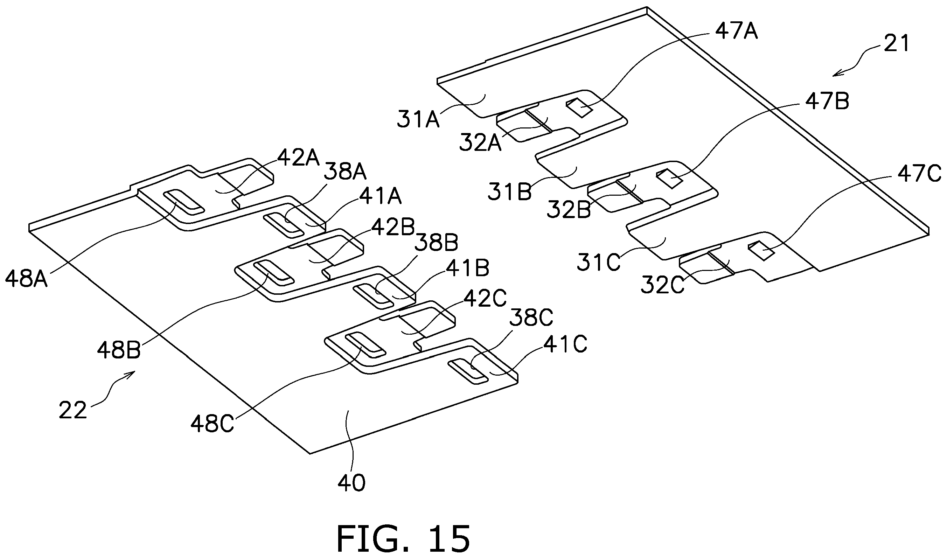

The shape or arrangement of the plurality of first protrusions 37A to 37C, the plurality of second protrusions 47A to 47C, the plurality of first holes 48A to 48C, and the plurality of second holes 38A to 38C are not limited to those of the above embodiments, and may be changed. For example, FIGS. 14 and 15 are perspective views showing a joint structure between a first cover 21 and a second cover 22 according to a modified example.

As shown in FIGS. 14 and 15, the plurality of first protrusions 37A to 37C and the plurality of second protrusions 47A to 47C may be arranged on the first cover 21. That is, the plurality of first protrusions 37A to 37C may be provided on the first outer plate portions 31A to 31C, and the plurality of second protrusions 47A to 47C may be provided on the first inner plate portions 32A to 32C. The plurality of first holes 48A to 48C and the plurality of second holes 38A to 38C may be arranged in the second cover 22. That is, the plurality of first holes 48A to 48C may be provided in the second inner plate portions 42A to 42C, and the plurality of second holes 38A to 38C may be provided in the second outer plate portions 41A to 41C.

### REFERENCE SIGNS LIST

1: Straddled vehicle, 3: Front wheel, 9: Vehicle body cover, 15: Undercover, 16: Inner panel, 21: First cover, 22: Second cover, 31A-31C: First outer plate portion, 32A-32C First inner plate portion, 37A-37C: First protrusion, 38A-38C: Second hole, 41A-41B: Second outer plate portion, 42A-42C: Second inner plate portion, 47A-47C: Second protrusion, 48A-48C: First hole

## Claims

1. A joint structure for a straddled vehicle body cover (9) including a first cover (21) and a second cover (22) attachable to a straddled vehicle (1), the joint structure comprising:
a plurality of first inner plate portions (32A, 32B, 32C) arranged along a seam between the first cover (21) and the second cover (22) and provided on the first cover (21);
a plurality of second inner plate portions (42A, 42B, 42C) arranged along the seam and provided on the second cover (22);
a plurality of first outer plate portions (31A, 31B, 31C) that are arranged along the seam, are provided on the first cover (21), and respectively overlap the plurality of second inner plate portions (42A, 42B, 42C) from an outside in a thickness direction (Z1) of the first cover (21)and the second cover (22);
a plurality of second outer plate portions (41A, 41B, 41C) that are arranged along the seam, are provided on the second cover (22), and respectively overlap the plurality of first inner plate portions (32A, 32B, 32C) from the outside in the thickness direction (Z1);
a plurality of first protrusions (37A, 37B, 37C) provided on one of the plurality of first outer plate portions (31A, 31B, 31C) and the plurality of second inner plate portions (42A, 42B, 42C), respectively;
a plurality of first holes (48A, 48B, 48C) that are provided in the other of the plurality of first outer plate portions (31A, 31B, 31C) and the plurality of second inner plate portions (42A, 42B, 42C), and engage with the plurality of first protrusions (37A, 37B, 37C), respectively;
a plurality of second protrusions (47A, 47B, 47C) provided on one of the plurality of first inner plate portions (32A, 32B, 32C) and the plurality of second outer plate portions (41A, 41B, 41C), respectively; and
a plurality of second holes (38A, 38B, 38C) that are provided in the other of the plurality of first inner plate portions (32A, 32B, 32C) and the plurality of second outer plate portions (41A, 41B, 41C), and engage with the plurality of second protrusions (47A, 47B, 47C), respectively.

2. The joint structure according to claim 1, wherein
the plurality of first protrusions (37A, 37B, 37C) are respectively provided on the plurality of first outer plate portions (31A, 31B, 31C),
the plurality of first holes (48A, 48B, 48C) are respectively provided in the plurality of second inner plate portions (42A, 42B, 42C),
the plurality of second protrusions (47A, 47B, 47C) are respectively provided on the plurality of second outer plate portions (41A, 41B, 41C), and
the plurality of second holes (38A, 38B, 38C) are respectively provided in the plurality of first inner plate portions (32A, 32B, 32C).

3. The joint structure according to claim 2, wherein
the plurality of first protrusions (37A, 37B, 37C) and the plurality of second holes (38A, 38B, 38C) are alternately arranged along the seam in the first cover (21), and
the plurality of second protrusions (47A, 47B, 47C) and the plurality of first holes (48A, 48B, 48C) are alternately arranged along the seam in the second cover (22).

4. The joint structure according to any one of claims 1 to 3, wherein
the plurality of first outer plate portions (31A, 31B, 31C) and the plurality of second outer plate portions (41A, 41B, 41C) each have a zigzag shape that meshes with each other in an extending direction in which the seam extends.

5. The joint structure according to any one of claims 1 to 4, wherein
the plurality of first inner plate portions (32A, 32B, 32C) and the plurality of second inner plate portions (42A, 42B, 42C) each have a zigzag shape that meshes with each other in a extending direction in which the seam extends.

6. The joint structure according to any one of claims 1 to 5, wherein
the plurality of first outer plate portions (31A, 31B, 31C) and the plurality of second outer plate portions (41A, 41B, 41C) are arranged alternately along the seam.

7. The joint structure according to claim 6, wherein
the plurality of first outer plate portions (31A, 31B, 31C) and the plurality of second outer plate portions (41A, 41B, 41C) are arranged flush on an outer surface of the vehicle body cover (9).

8. The joint structure according to any one of claims 1 to 7, wherein
the plurality of first inner plate portions (32A, 32B, 32C) and the plurality of second inner plate portions (42A, 42B, 42C) are arranged alternately along the seam.

9. The joint structure according to claim 1, wherein
the plurality of first protrusions (37A, 37B, 37C) are respectively provided on the plurality of first outer plate portions (31A, 31B, 31C),
the plurality of first holes (48A, 48B, 48C) are respectively provided in the plurality of second inner plate portions (42A, 42B, 42C),
the plurality of second protrusions (47A, 47B, 47C) are respectively provided on the plurality of first inner plate portions (32A, 32B, 32C), and
the plurality of second holes (38A, 38B, 38C) are respectively provided in the plurality of second outer plate portions (41A, 41B, 41C).

10. The joint structure according to any one of claims 1 to 9, wherein the vehicle body cover (9) has a curved shape at the seam.

11. The joint structure according to any one of claims 1 to 10, wherein
the vehicle body cover (9) is divided into the first cover (21) and the second cover (22) in a left-right direction of the straddled vehicle (1).

12. The joint structure according to claim 11, wherein
the straddled vehicle (1) includes a front wheel (3), and
the joint structure is arranged adjacent to the front wheel (3).

13. The joint structure according to claim 12, wherein
the first cover (21) and the second cover (22) are an undercover (15) arranged behind the front wheel (3).

14. The joint structure according to claim 12, wherein
the first cover (21) and the second cover (22) are an inner panel (16) arranged above the front wheel (3).

15. A straddled vehicle (1) comprising the straddled vehicle body cover joint structure according to any one of claims 1 to 14.

## Patentansprüche

1. Verbindungsstruktur für eine Karosserieverkleidung (9) eines Spreizsitz-Fahrzeugs, die eine erste Verkleidung (21) sowie eine zweite Verkleidung (22) enthält, die an dem Spreizsitz-Fahrzeug (1) angebracht werden können, wobei die Verbindungsstruktur umfasst:
eine Vielzahl erster innerer Plattenabschnitte (32A, 32B, 32C), die entlang eines Falzes zwischen der ersten Verkleidung (21) und der zweiten Verkleidung (22) angeordnet sind und sich an der ersten Verkleidung (21) befinden;
eine Vielzahl zweiter innerer Plattenabschnitte (42A, 42B, 42C), die entlang des Falzes angeordnet sind und sich an der zweiten Verkleidung (22) befinden;
eine Vielzahl erster äußerer Plattenabschnitte (31A, 31B, 31C), die entlang des Falzes angeordnet sind, sich an der ersten Verkleidung (21) befinden und jeweils die Vielzahl zweiter innerer Plattenabschnitte (42A, 42B, 42C) von einer Außenseite in einer Dickenrichtung (Z1) der ersten Verkleidung (21) und der zweiten Verkleidung, (22) überlappen;
eine Vielzahl zweiter äußerer Plattenabschnitte (41A, 41B, 41C), die entlang des Falzes angeordnet sind, sich an der zweiten Verkleidung (22) befinden und jeweils die Vielzahl erster innerer Plattenabschnitte (32A, 32B, 32C) von der Außenseite in der Dickenrichtung (Z1) überlappen;
eine Vielzahl erster Vorsprünge (37A, 37B, 37C), die sich an der Vielzahl erster äußerer Plattenabschnitte (31A, 31B, 31C) bzw. der Vielzahl zweiter innerer Plattenabschnitte (42A, 42B, 42C) befinden;
eine Vielzahl erster Löcher (48A, 48B, 48C), die sich an den anderen der Vielzahl erster äußerer Plattenabschnitte (31A, 31B, 31C) und der Vielzahl zweiter innerer Plattenabschnitte (42A, 42B, 42C) befinden und jeweils mit der Vielzahl erster Vorsprünge (37A, 37B, 37C) in Eingriff sind;
eine Vielzahl zweiter Vorsprünge (47A, 47B, 47C), die sich an der Vielzahl erster innerer Plattenabschnitte (32A, 32B, 32C) bzw. der Vielzahl zweiter äußerer Plattenabschnitte (41A, 41B, 41C) befinden; sowie
eine Vielzahl zweiter Löcher (38A, 38B, 38C), die sich an den anderen der Vielzahl erster innerer Plattenabschnitte (32A, 32B, 32C) und der Vielzahl zweiter innerer Plattenabschnitte (41A, 41B, 41C) befinden; und jeweils mit der Vielzahl zweiter Vorsprünge (47A, 47B, 47C) in Eingriff sind.

2. Verbindungsstruktur nach Anspruch 1, wobei
sich die Vielzahl erster Vorsprünge (37A, 37B, 37C) jeweils an der Vielzahl erster äußerer Plattenabschnitte (31A, 31B, 31C) befinden,
sich die Vielzahl erster Löcher (48A, 48B, 48C) jeweils in der Vielzahl zweiter innerer Plattenabschnitte (42A, 42B, 42C) befinden,
sich die Vielzahl zweiter Vorsprünge (47A, 47B, 47C) jeweils an der Vielzahl zweiter äußerer Plattenabschnitte (41A, 41B, 41C) befinden, und
sich die Vielzahl zweiter Löcher (38A, 38B, 38C) jeweils in der Vielzahl erster innerer Plattenabschnitte (32A, 32B, 32C) befinden.

3. Verbindungsstruktur nach Anspruch 2, wobei
die Vielzahl erster Vorsprünge (37A, 37B, 37C) und die Vielzahl zweiter Löcher (38A, 38B, 38C) abwechselnd entlang des Falzes in der ersten Verkleidung (21) angeordnet sind, und
die Vielzahl zweiter Vorsprünge (47A, 47B, 47C) und die Vielzahl erster Löcher (48A, 48B, 48C) abwechselnd entlang des Falzes in der zweiten Verkleidung (22) angeordnet sind.

4. Verbindungsstruktur nach einem der Ansprüche 1 bis 3, wobei
die Vielzahl erster äußerer Plattenabschnitte (31A, 31B, 31C) und die Vielzahl zweiter äußerer Plattenabschnitte (41A, 41B, 41C) jeweils Zickzack-Formen haben, die in einer Verlaufsrichtung, in der der Falz verläuft, miteinander kämmen.

5. Verbindungsstruktur nach einem der Ansprüche 1 bis 4, wobei
die Vielzahl erster innerer Plattenabschnitte (32A, 32B, 32C) und die Vielzahl zweiter innerer Plattenabschnitte (42A, 42B, 42C) jeweils Zickzack-Formen haben, die in einer Verlaufsrichtung, in der der Falz verläuft, miteinander kämmen.

6. Verbindungsstruktur nach einem der Ansprüche 1 bis 5, wobei
die Vielzahl erster äußerer Plattenabschnitte (31A, 31B, 31C) und die Vielzahl zweiter äußerer Plattenabschnitte (41A, 41B, 41C) abwechselnd entlang des Falzes angeordnet sind.

7. Verbindungsstruktur nach Anspruch 6, wobei
die Vielzahl erster äußerer Plattenabschnitte (31A, 31B, 31C) und die Vielzahl zweiter äußerer Plattenabschnitte (41A, 41B, 41C) bündig an einer Außenfläche der Fahrzeug-Karosserieverkleidung (9) angeordnet sind.

8. Verbindungsstruktur nach einem der Ansprüche 1 bis 7, wobei
die Vielzahl erster innerer Plattenabschnitte (32A, 32B, 32C) und die Vielzahl zweiter innerer Plattenabschnitte (42A, 42B, 42C) abwechselnd entlang des Falzes angeordnet sind.

9. Verbindungsstruktur nach Anspruch 1, wobei
sich die Vielzahl erster Vorsprünge (37A, 37B, 37C) jeweils an der Vielzahl erster äußerer Plattenabschnitte (31A, 31B, 31C) befinden,
sich die Vielzahl erster Löcher (48A, 48B, 48C) jeweils in der Vielzahl zweiter innerer Plattenabschnitte (42A, 42B, 42C) befinden,
sich die Vielzahl zweiter Vorsprünge (47A, 47B, 47C) jeweils an der Vielzahl erster innerer Plattenabschnitte (32A, 32B, 32C) befinden, und
sich die Vielzahl zweiter Löcher (38A, 38B, 38C) jeweils in der Vielzahl zweiter äußerer Plattenabschnitte (41A, 41B, 41C) befinden.

10. Verbindungsstruktur nach einem der Ansprüche 1 bis 9, wobei die Fahrzeug-Karosserieverkleidung (9) an dem Falz eine gekrümmte Form hat.

11. Verbindungsstruktur nach einem der Ansprüche 1 bis 10, wobei die Fahrzeug-Karosserieverkleidung (9) in einer Querrichtung des Spreizsitz-Fahrzeugs (1) in die erste Verkleidung (21) und die zweite Verkleidung (22) unterteilt ist.

12. Verbindungsstruktur nach Anspruch 11, wobei
das Spreizsitz-Fahrzeug (1) ein Vorderrad (3) enthält, und
die Verbindungsstruktur an das Vorderrad (3) angrenzend angeordnet ist.

13. Verbindungsstruktur nach Anspruch 12, wobei
die erste Verkleidung (21) und die zweite Verkleidung (22) eine untere Verkleidung (15) bilden, die hinter dem Vorderrad (3) angeordnet ist.

14. Verbindungsstruktur nach Anspruch 12, wobei
die erste Verkleidung (21) und die zweite Verkleidung (22) eine innere Verkleidung (16) bilden, die oberhalb des Vorderrades (3) angeordnet ist.

15. Spreizsitz-Fahrzeug (1), das Verbindungsstruktur für eine Karosserieverkleidung eines Spreizsitz-Fahrzeugs nach einem der Ansprüche 1 bis 14 umfasst.

## Revendications

1. Structure d'assemblage pour un couvercle de carrosserie de véhicule à enfourcher (9) comportant un premier couvercle (21) et un second couvercle (22) pouvant être fixés à un véhicule à enfourcher (1), la structure d'assemblage comprenant :
une pluralité de première parties de plaque intérieure (32A, 32B, 32C) agencées le long d'une jointure entre le premier couvercle (21) et le second couvercle (22) et disposées sur le premier couvercle (21) ;
une pluralité de secondes parties de plaque intérieure (42A, 42B, 42C) agencées le long de la jointure et disposées sur le second couvercle (22) ;
une pluralité de premières parties de plaque extérieure (31A, 31B, 31C) qui sont agencées le long de la jointure, sont disposées sur le premier couvercle (21), et chevauchent respectivement la pluralité de secondes parties de plaque intérieure (42A, 42B, 42C) depuis un extérieur dans une direction d'épaisseur (Z1) du premier couvercle (21) et du second couvercle (22) ;
une pluralité de secondes parties de plaque extérieure (41A, 41B, 41C) qui sont agencées le long de la jointure, sont disposées sur le second couvercle (22), et chevauchent respectivement la pluralité de premières parties de plaque intérieure (32A, 32B, 32C) depuis l'extérieur dans la direction d'épaisseur (Z1) ;
une pluralité de premières saillies (37A, 37B, 37C) disposées sur l'une de la pluralité de premières parties de plaque extérieure (31A, 31B, 31C) et de la pluralité de secondes parties de plaque intérieure (42A, 42B, 42C), respectivement ;
une pluralité de premiers trous (48A, 48B, 48C) qui sont disposés dans l'autre de la pluralité de premières parties de plaque extérieure (31A, 31B, 31C) et de la pluralité de secondes parties de plaque intérieure (42A, 42B, 42C), et viennent en prise avec la pluralité de premières saillies (37A, 37B, 37C), respectivement ;
une pluralité de secondes saillies (47A, 47B, 47C) disposées sur l'une de la pluralité de premières parties de plaque intérieure (32A, 32B, 32C) et de la pluralité de secondes parties de plaque extérieure (41A, 41B, 41C), respectivement ; et
une pluralité de seconds trous (38A, 38B, 38C) qui sont disposés dans l'autre de la pluralité de premières parties de plaque intérieure (32A, 32B, 32C) et de la pluralité de secondes parties de plaque extérieure (41A, 41B, 41C), et viennent en prise avec la pluralité de secondes saillies (47A, 47B, 47C), respectivement.

2. Structure d'assemblage selon la revendication 1, dans laquelle
la pluralité de premières saillies (37A, 37B, 37C) sont respectivement disposées sur la pluralité de premières parties de plaque extérieure (31A, 31B, 31C),
la pluralité de premiers trous (48A, 48B, 48C) sont respectivement disposés dans la pluralité de secondes parties de plaque intérieure (42A, 42B, 42C),
la pluralité de seconds saillies (47A, 47B, 47C) sont respectivement disposées sur la pluralité de secondes parties de plaque extérieure (41A, 41B, 41C), et
la pluralité de seconds trous (38A, 38B, 38C) sont respectivement disposés dans la pluralité de premières parties de plaque intérieure (32A, 32B, 32C).

3. Structure d'assemblage selon la revendication 2, dans laquelle
la pluralité de premières saillies (37A, 37B, 37C) et la pluralité de seconds trous (38A, 38B, 38C) sont disposés de manière alternée le long de la jointure dans le premier couvercle (21), et
la pluralité de secondes saillies (47A, 47B, 47C) et la pluralité de premiers trous (48A, 48B, 48C) sont disposés de manière alternée le long de la jointure dans le second couvercle (22).

4. Structure d'assemblage selon l'une quelconque des revendications 1 à 3, dans laquelle
la pluralité de premières parties de plaque extérieure (31A, 31B, 31C) et la pluralité de secondes parties de plaque extérieure (41A, 41B, 41C) ont chacune une forme en zigzag qui les emboîte ensemble dans une direction d'extension dans laquelle s'étend la jointure.

5. Structure d'assemblage selon l'une quelconque des revendications 1 à 4, dans laquelle
la pluralité de premières parties de plaque intérieure (32A. 32B, 32C) et la pluralité de secondes parties de plaque intérieure (42A, 42B, 42C) ont chacune une forme en zigzag qui les emboîte ensemble dans une direction d'extension dans laquelle s'étend la jointure.

6. Structure d'assemblage selon l'une quelconque des revendications 1 à 5, dans laquelle
la pluralité de premières parties de plaque extérieure (31A, 31B, 31C) et la pluralité de secondes parties de plaque extérieure (41A, 41B, 41C) sont disposées de manière alternée le long de la jointure.

7. Structure d'assemblage selon la revendication 6, dans laquelle
la pluralité de premières parties de plaque extérieure (31A, 31B, 31C) et la pluralité de secondes parties de plaque extérieure (41A, 41B, 41C) sont agencées au ras d'une surface extérieure du couvercle de carrosserie de véhicule (9).

8. Structure d'assemblage selon l'une quelconque des revendications 1 à 7, dans laquelle
la pluralité de premières parties de plaque intérieure (32A, 32B, 32C) et la pluralité de secondes parties de plaque intérieure (42A, 42B, 42C) sont agencées de manière alternée le long de la jointure.

9. Structure d'assemblage selon la revendication 1, dans laquelle
la pluralité de premières saillies (37A, 37B, 37C) sont respectivement disposées sur la pluralité de premières parties de plaque extérieure (31A, 31B, 31C),
la pluralité de premiers trous (48A, 48B, 48C) sont respectivement disposés dans la pluralité de secondes parties de plaque intérieure (42A, 42B, 42C),
la pluralité de secondes saillies (47A, 47B, 47C) sont respectivement disposées sur la pluralité de premières parties de plaque intérieure (32A, 32B, 32C), et
la pluralité de seconds trous (38A, 38B, 38C) sont respectivement disposés dans la pluralité de secondes parties de plaque extérieure (41A, 41B, 41C).

10. Structure d'assemblage selon l'une quelconque des revendications 1 à 9, dans laquelle
le couvercle de carrosserie du véhicule (9) a une forme incurvée au niveau de la jointure.

11. Structure d'assemblage selon l'une quelconque des revendications 1 à 10, dans laquelle
le couvercle de carrosserie de véhicule (9) est divisé en le premier couvercle (21) et le second couvercle (22) dans une direction gauche-droite du véhicule à enfourcher (1).

12. Structure d'assemblage selon la revendication 11, dans laquelle
le véhicule à enfourcher (1) comporte une roue avant (3), et
la structure d'assemblage est agencée à proximité adjacente de la roue avant (3).

13. Structure d'assemblage selon la revendication 12, dans laquelle
le premier couvercle (21) et le second couvercle (22) sont un couvercle inférieur (15) agencé derrière la roue avant (3).

14. Structure d'assemblage selon la revendication 12, dans laquelle
le premier couvercle (21) et le second couvercle (22) sont un panneau intérieur (16) agencé au-dessus de la roue avant (3).

15. Véhicule à enfourcher (1) comprenant la structure d'assemblage de couvercle de carrosserie de véhicule à enfourcher selon l'une quelconque des revendications 1 à 14.
